(19) Europäisches Patentamt
European Patent Office
Office européen des brevets

(11) **EP 3 556 468 B1**

(12) **EUROPEAN PATENT SPECIFICATION**

(45) Date of publication and mention
of the grant of the patent:
**25.11.2020 Bulletin 2020/48**

(51) Int Cl.:
*C22B 3/22* (2006.01)          *C22B 3/24* (2006.01)
*C22B 3/44* (2006.01)          *C22B 7/00* (2006.01)
*C22B 7/02* (2006.01)          *C22B 3/00* (2006.01)

(21) Application number: **18168236.0**

(22) Date of filing: **19.04.2018**

(54) **METHOD AND APPARATUS FOR FORMING A SUSPENSION OF PARTLY DISSOLVED FLY ASH IN A MINERAL ACID**

VERFAHREN UND VORRICHTUNG ZUR HERSTELLUNG EINER SUSPENSION VON TEILWEISE GELÖSTER FLUGASCHE IN EINER MINERALSÄURE

PROCÉDÉ ET APPAREIL DE FORMATION D'UNE SUSPENSION DE CENDRES VOLANTES PARTIELLEMENT DISSOUTES DANS UN ACIDE MINÉRAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.10.2019 Bulletin 2019/43**

(73) Proprietor: **NORSEP AS**
**3903 Porsgrunn (NO)**

(72) Inventors:
• **BAKKE, Per**
**N-3919 Porsgrunn (NO)**
• **BUER, Albert, Andre**
**N-3943 Porsgrunn (NO)**
• **GROVEN, Odd, Henning**
**N-6440 Elnesvågen (NO)**

(74) Representative: **Onsagers AS**
**P.O. Box 1813 Vika**
**0123 Oslo (NO)**

(56) References cited:
**WO-A1-2005/040437       US-A- 4 149 945**

• TANG JINFENG ET AL: "Leaching optimization of municipal solid waste incineration ash for resource recovery: A case study of Cu, Zn, Pb and Cd", WASTE MANAGEMENT, vol. 48, 14 October 2015 (2015-10-14), pages 315-322, XP029378304, ISSN: 0956-053X, DOI: 10.1016/J.WASMAN.2015.10.003
• QUINA M J ET AL: "The influence of pH on the leaching behaviour of inorganic components from municipal solid waste APC residues", WASTE MANAGEMENT, ELSEVIER, NEW YORK, NY, US, vol. 29, no. 9, 1 September 2009 (2009-09-01), pages 2483-2493, XP026321260, ISSN: 0956-053X, DOI: 10.1016/J.WASMAN.2009.05.012 [retrieved on 2009-07-09]
• BOESCH MICHAEL E ET AL: "An LCA model for waste incineration enhanced with new technologies for metal recovery and application to the case of Switzerland", WASTE MANAGEMENT, ELSEVIER, NEW YORK, NY, US, vol. 34, no. 2, 4 December 2013 (2013-12-04), pages 378-389, XP028810246, ISSN: 0956-053X, DOI: 10.1016/J.WASMAN.2013.10.019

## Description

### Background

Fly ash is a fine powdered waste product entrained in the combustion gases from combustion and incineration processes. The fly ash contains a mixture of mineral oxides and a range of other chemical compounds which may have a detrimental effect on the environment. Present environmental standards therefore generally forbid discharging the fly ash to the atmosphere.

Thus, present day combustion/incineration plants typically apply capturing technology to separate the fly ash out of the combustion gases before venting the gases to the atmosphere. This produces huge amounts of captured fine powdered ash which must be disposed of. For example, NOAH AS, an industrial waste disposal company operating in Scandinavia receives more than 300 000 metric tonnes of fly ash every year from incineration plants.

Due to the content of heavy metals, fly ash from incinerators is considered a harmful waste and is subject to environmental restrictions requiring specially secured waste disposals for deposition of the fly ash. For example, fly ash from a municipal incineration plant in Oslo, Norway, is treated with sulphuric acid to encapsulate the fly ash in gypsum, which then is sent to disposal at a landfill for hazardous waste. However, the disposal of huge amounts of fly ash in landfill deposits for harmful waste is problematic both from an economical and a resource point of view.

Fly ash from incinerators of municipal waste contains relatively large concentrations of volatile metals, such as e.g. zinc vaporised in the incineration and condensed to salts, oxides, silicates or other compounds in the fly ash. Fly ash may contain around 1.5 wt% zinc such that disposal of fly ash in landfills often buries vast amounts of zinc. This is problematic from a resource point of view because it is estimated that known global reserves on zinc containing ores holds around 220 million metric tonnes of zinc, while the annual global zinc consumption is about 13 million metric tonnes, of which about 1/3 is recycled. These figures inform that it is necessary to significantly increase the recycle ratio to secure future access to zinc.

To extract and recycle the volatile metals in the fly ash also makes sense from an economical point of view, because the deposition of vast amounts fly ash per year in leakage secured landfills is costly. Without the volatile metals, the fly ash may no longer be classified as environmental hazardous waste and may be disposed in ordinary land-fills or applied as raw material for other products, for example foam glass aggregate. In addition, the extracted metal products can be developed to commercial commodities enabling generating revenue from waste fractions.

### Prior art

From US 5 512 257 it is known a process where fly ash from incineration plants is treated with an acidic aqueous solution for the purpose of removing heavy metals. The residual solid matter is filtered. The filtration residue is treated with a precipitating agent for heavy metals. The thereby obtained inert residue can be directly dumped.

US 4 617 180 discloses a process for purifying flue gases developed during the combustion of waste materials and containing solids of various compositions as well as pollutant gases and heavy metals in gaseous form, wherein the primarily solid components are removed from the flue gas in a separating system and are collected as flue ashes and wherein the flue gas is washed for the purpose of binding the pollutant gases of the residual solids components, particularly in the slag. It is the object of the present invention to provide a process wherein, during flue gas purification, the gaseous heavy metal contaminants as well as the heavy metal contaminants which are present in the flue ash and in the slag in soluble form, can be removed from the flue gas purification process in the most compact form, with simultaneously achieving good, or even improved, initial purification of HCl, $SO_2$, and $NO_x$. All other residues should be recyclable for further use. The remainder of heavy metal components which are not bound in the slag are isolated from the slag by a subsequent weakly acid treatment.

From JP 2001/113242 it is known a method including a salt elution process in which fly ash is added with a mineral acid to be converted into slurry, a heavy metal separation process in which the slurry is neutralized to be separated into precipitates containing heavy metals and filtrate containing salts, a dissolved oxygen removing process for removing dissolved oxygen from the filtrate, an iron salt coprecipitation process in which an iron (II) salt is added to adjust pH at 8-11, preferably at 8-9 and 9-11 in turn in two stages, to coprecipitate selenium and other heavy metals with iron hydroxide, a precipitate washing process for washing the heavy metal-containing precipitates, and a heavy metal recovery process in which the washed precipitates, after being repulped with a mineral acid, is neutralized again for solid-liquid separation. The filtrate in the heavy metal recovery process is used as water to make the slurry in the salt elution process.

JP 2003/181413 discloses a treatment method of fly ash comprising a heavy metal elution process in which preferably a solution of sodium hydroxide as an alkali agent is added to the fly ash and, thereby, the fly ash is slurrified, a calcium separating process in which the slurry is diluted and is fractionated into a calcium-containing deposit and a heavy metal-containing filtrate, a heavy metal separating process in which a mineral acid is added to the heavy metal-containing filtrate, thereby, the filtrate is adjusted to pH 7-10 and, thereafter, the heavy metal is fractionated to hydroxides or sulfates or a lead separating process in which sulfuric acid as the mineral acid is added to the heavy metal- containing filtrate and the filtrate is adjusted to <=pH 5, preferably <=pH 4 and, thereafter, is fractionated to a lead-containing deposit and a zinc-containing filtrate and a zinc separating process in which the alkali agent is added to the zinc-containing filtrate, the zinc-containing filtrate is adjusted to pH 7-10, preferably, to pH 8-9 and, thereafter, is fractionated to a zinc-containing deposit and a salt-containing filtrate.

From JP 2005/272955 it is known a treatment method for fly ash where heavy metals can be recovered from fly ash generated at the time of incinerating waste such as shredder dust at a high recovery rate, and can be recycled for a refining raw material or the like. After an acid leaching stage where acid such as hydrochloric acid is added to slurry comprising fly ash showing acidity when being dissolved in pure water such as fly ash generated at the time of incinerating waste such as shredder dust to regulate its pH to <=3, preferably to 1 to 2, thus heavy metals are ionized, if required, a sulfurizing stage where a sulfurizing agent is added thereto is performed, and a heavy metal recovering stage where heavy metals such as copper and zinc are separated and recovered by floatation is performed.

JP 2007/186761 discloses a valuable metal recovery method comprises the steps of: dechlorination-washing fly ash containing the valuable metal and chlorine with a washing liquid with a pH of 10 to 12; mixing the dechlorinated fly ash, a zinc-containing raw material, a flux, and coal; drying the mixture; crushing the dried product; forming the crushed product into an agglomerated ore; and melt-reducing the agglomerated ore. Alternatively, the valuable metal recovery method comprises the steps of: recovering zinc as crude zinc oxide by melt-reduction of the agglomerated ore; further dechlorination-washing the recovered crude zinc oxide with a washing liquid with a pH of 10 to 12; and using the dechlorinated crude zinc oxide in zinc refining.

WO 2005/040437 A1 discloses a method of the wet treatment of a fly ash, which comprises a step of subjecting a fly ash obtained from a combustion flue gas generated in the incineration of a municipal refuse or the like to an acid leaching treatment by the use of hydrochloric acid acidic solution having a pH of 3.5 or lower.

**Objective of the invention**

The main objective of the invention is to provide a method and reactor for forming a suspension of partly dissolved fly ash in a mineral acid.

A further objective of the invention is to provide a method and reactor which utilises empirical information of how the pH and temperature of the mineral acid responds to added fly ash to regulate the addition of fly ash to an optimized dissolution degree of the one or metals which are to be extracted from the fly ash. A further objective of the invention is to provide a method and plant for extracting one or more metals from fly ash utilising the method according to the invention for forming a suspension of partly dissolved fly ash in a mineral acid.

**Description of the invention**

The invention may be considered as a method for automatic regulation of the addition of solid fly ash to a mineral acid to achieve an optimized dissolution degree of the fly ash, and a reactor for executing the automatic regulation and obtain a slurry with an optimized content of dissolved metals to be extracted in downstream processing.

Thus, in a first aspect, the invention relates to a method for forming a suspension of partly dissolved fly ash in an aqueous mineral acid solution, wherein the method comprises the following process steps:

1) supplying a mass, L, of an aqueous mineral acid solution to a dissolution reactor and then measuring and registering the initial temperature, To, and initial, pHo, of the aqueous mineral acid solution,
2) set n = 1, where n is an integer, and select a target pH, $pH_{targ}$, to be reached in the suspension,
3) for $n \leq N$, where N is an integer from 3 or higher, execute steps i), ii) and iii) in successive order:

   i) adding and mixing an amount $S_n$ of solid fly ash into the aqueous mineral acid solution,
   ii) when the amount $S_n$ is dissolved, measuring and registering the temperature and pH of the aqueous mineral acid solution at this n'th step as $T_n$ and $pH_n$, respectively, and determining and registering an accumulated amount of fly ash, $S_{n, acc}$, being added to the aqueous mineral acid solution at this n'th step, and
   iii) set n = n+1 and go to step i),

4) apply the registered temperatures To to $T_n$ and the registered pH-values $pH_0$ to $pH_n$, and the registered amounts of added fly ash, $S_{n, acc}$, and equations:

$$\Gamma_n^2 = \beta_1 - \beta_2 \Delta T_n \qquad \text{and} \qquad \Delta T_n = \gamma_1 \left( \frac{S_{n,acc}}{L} \right) - \gamma_2 \left( \frac{S_{n,acc}}{L} \right)^2,$$

where $\Gamma_n = 10^{-pHn}$, $\Delta T_n = T_n - T_0$, and $\beta_1$, $\beta_2$, $\gamma_1$, and $\gamma_2$ are parameters, to determine the parameters $\beta_1$, $\beta_2$, $\gamma_1$, and $\gamma_2$ by regression analysis,

5) determining a total amount, $S_{tot}$, of solid fly ash to be added to the aqueous mineral acid solution from the relation:

$$S_{tot} = \frac{L}{2\gamma_2}\left[\gamma_1 + \sqrt{\gamma_1{}^2 + 4\gamma_2\left(\frac{\beta_1 - (10^{-pH_{targ}})^2}{\beta_2}\right)}\right],$$

and

6) if $S_{n,\,acc} < S_{tot}$, execute steps j) and jjj):

j) adding and mixing an amount $S_n$ into the aqueous mineral acid solution,
jjj) if $S_{n,\,acc} < S_{tot}$, set n = n+1 and go to step j),
or else:
jjjj) stop feeding and mixing solid fly ash into the aqueous mineral acid solution.

Fly ash is a mixture of particulate matter captured in flue gases exiting a combustion/incineration process, i.e. particles being sufficiently small and light to be entrained and carried away with the flue gas. Fly ash consist thus of a mixture of particulate condensed matter, particles of ash, and particles of more or less unburnt remains of the fuel being combusted. The composition of the fly ash is thus highly dependent on the process parameters of the combustion/incineration process and the fuel being combusted. The invention according to the first aspect of the invention is not tied to any specific source of fly ash, it may apply fly ash formed in any combustion process. However, an especially suited and preferred fly ash is fly ash from incineration of municipal waste (hereby denoted; MSWI fly ash) due to its relatively high content of heavy metals and other metals which may be converted to valuable products/commercial commodities, and further because MSWI-fly ash typically also contains relatively high fractions of chlorides which may be converted to commercial commodities such as road salt or other products. MSWI-fly ash is particularly varying in composition due to relatively huge variations in the composition of the waste being incinerated, however, the following elements are usually present in various amounts, ref [1]; Al, Ca, Cl, K, Na, Si, and O, and heavy metals such as; Cr, Cu, Pb, and Zn.

Fly ash contains both soluble compounds, typically salts such as oxides and chlorides of the above-mentioned elements (and other elements), and non-soluble compounds. The solubility of several typical salts in the fly ash is relatively low in neutral water (pH around 7). For example, MSWI-fly ash added to liquid water in a solid to liquid weight ratio of 1 : 10, only dissolves a minor fraction of the salt content and the pH stabilises around pH = 12, depending on the CaO content in the fly ash. However, at lower pH values, the solubility of these salts increases significantly. The stronger the acid, the higher dissolution rates of the salts. Thus, the term "forming a suspension of partly dissolved fly ash" as used herein, means that an amount of fly ash is added to an aqueous mineral acid solution having a pH of 2 or less (before addition of the fly ash) to enable a dissolution rate of the salt content of the fly ash. The mineral acid may be any mineral acid, such as e.g. hydrochloric acid, nitric acid, nitrous acid, sulphuric acid, sulphurous acid, etc. For example, MSWI-fly ash added to an 1 M aqueous hydrochloric acid in a solid to liquid weight ratio of 1 : 10, will result in substantial dissolution of the salt content of the fly ash and the pH becomes stabilized in the range of from pH = 1 to pH = 3, depending on the composition of the fly ash.

The major part of the soluble salts in fly ash is basic and consumes mineral acid when dissolving. The pH of the suspension increases in proportion to how much base being dissolved. However, the solubility of at least some of the basic compounds in the fly ash decreases significantly when the pH becomes higher. Thus, the amount of fly ash being added to the aqueous mineral acid solution may advantageously be balanced between, on one hand, the need for adding as much fly ash as possible to obtain as high concentration as possible in the suspension of the compounds intended to be extracted from the fly ash, and on the other hand, to restrict the amount of added fly ash to give an over-stoichiometric amount of acid to ensure that the suspension is sufficiently acidic to dissolve most or all of the dissolvable compounds in the fly ash. I.e. to avoid the pH of the suspension to become too high and cause insufficient dissolution of added fly ash. The optimal balance is obtained when adding as much fly as possible ash to the aqueous mineral acid solution, but not more than which is effectively dissolved. The term "target pH, $pH_{targ}$" as used herein represents the pH-value of a suspension after having added an optimally balanced amount of solid fly ash to an aqueous mineral acid and the dissolvable compounds of the fly ash have reached chemical equilibrium with the mineral acid. Different salts have different solubility as function of pH. The target pH which should be selected depends therefore on which metal salt(s) in the solid fly ash is being intended to be dissolved and later extracted by precipitation. However, in practice, target value representing the optimal balance may advantageously be chosen to be in one of the following ranges; of from $pH_{targ} = 1.0$ to $pH_{targ} = 4.0$, more preferably of from $pH_{targ} = 1.5$ to $pH_{targ} = 3.0$, more preferably of from $pH_{targ} = 1.5$ to $pH_{targ} = 2.5$, and most preferably of from $pH_{targ} = 1.5$ to $pH_{targ} = 2.0$.

The simplest thinkable method for regulating the addition of solid fly ash is to apply one or more pH-sensor(s) in the mineral acid and terminate the feed of solid fly ash when measuring a pH equal to the selected target pH, $pH_{targ}$. However, pH measurements in suspensions have shown to be prone to systematic error readings, especially at low pH-values.

Another simple approach for regulating the amount of solid fly ash to the mineral acid is to apply the acid balance which may be defined by the relation:

$$pH = -log_{10}\left(C_0 - \frac{C_B S}{L}\right) \qquad (1)$$

where $C_0$ is the initial concentration of mineral acid in the aqueous mineral acid solution, L is amount (by mass) of the aqueous mineral acid solution, $C_B$ is the concentration of dissolvable base in the solid fly ash, and S is amount (by mass) of solid fly ash added to the suspension. From relation (1) the total amount of solid fly ash, $S_{tot}$, to be added to obtain $pH_{targ}$ is:

$$S_{tot} = \frac{L}{C_B}\left[C_0 - 10^{-pH_{targ}}\right] \qquad (2)$$

Eqn. (2) provides satisfactory estimates of total amount of solid fly ash, $S_{tot}$, to be added to the mineral acid to arrive at the selected target pH when the strength of the mineral acid and the composition, i.e. the contents of and which basic salts being present in the solid fly ash, are known prior to the formation of the suspension of partly dissolved fly ash in an aqueous mineral acid solution. However, the exact strength of the mineral acid and/or content of basic salts in the fly ash is not always known, especially when applying waste fractions as the raw materials. Then there may be significant variations in the composition of the fly ash being added during the formation of the suspension, i.e. the composition of addition $S_n$ may be significantly different from the composition of addition $S_{n+1}$, especially when applying fly ash from municipal waste incineration.

In such cases, it is highly advantageous to be able to regulate the amount of fly ash being added without prior knowledge of acid strength and/or composition of the fly ash, and even more advantageous if the regulation of amount of added fly ash may automatically adapts itself in relation to varying (and unknown) fly ash composition during addition. Besides, also utilising the acid balance (eqn. 2) to regulate the feed also includes relying on pH measurements which may be prone to systematic errors. Thus, the method according to the first aspect of the invention utilises both how the pH and the temperature of the aqueous mineral acid solution responds to solid fly ash being added and mixed into it to regulate the feed of fly ash.

The dissolution of fly ash in a mineral acid is exothermic, the temperature of the suspension being formed increases in proportion to the content of basic salts being added together with the fly ash. The temperature increase resulting from the exothermic dissolution of compounds in the fly ash is usually not higher than around 20 - 25 °C. At such moderate temperature increases, it is a good approximation to neglect the heat loss to the environment and set that the exothermic heat of dissolution equals the increase in heat content of the suspension, such that the temperature increase, $\Delta T$, in the suspension is given by the heat balance:

$$\Delta T = a\left(C_0 - \frac{C_B S}{2L}\right)\frac{S}{L} \qquad (3)$$

where "a" is a constant to be determined, L is amount (by mass) of the aqueous mineral acid solution, $C_B$ is the concentration of dissolvable base in the solid fly ash, and S is amount (by mass) of solid fly ash added to the suspension, and $C_0$ is the initial concentration of mineral acid in the aqueous mineral acid solution.

Relation (3) may also be given as:

$$\Delta T = a\left(\Gamma + \frac{C_B S}{2L}\right)\frac{S}{L} \qquad (4)$$

where $\Gamma = C_0 - \frac{C_B S}{L} = 10^{-pH}$, to illustrate that the pH increase given by relation (1) is connected to the temperature increase given in relation (3).

The acid balance function, eqn. (1) is numerically challenging because at low pH relatively large changes in added fly ash only lead to very small changes in pH, whereas at higher pH, only small changes in added fly ash may lead to large changes in pH. This may be alleviated by combining the acid balance and heat balance, i.e. equations eqn. (1) and eqn. (3) can be combined to give:

$$pH = -\frac{1}{2}log_{10}\left(C_0{}^2 - \frac{2C_B\Delta T}{a}\right) \qquad (5)$$

This expresses pH as a function of $\Delta T$, not involving the added amount of S. Eqn. (5) may be parametrized and given on form:

$$\Gamma^2 = \beta_1 - \beta_2\Delta T \qquad (6)$$

where $\beta_1$ and $\beta_2$ are parameters to be determined. Likewise, the heat balance may be parametrized and given on form:

$$\Delta T = \gamma_1\left(\frac{S}{L}\right) - \gamma_2\left(\frac{S}{L}\right)^2 \qquad (7)$$

where $\gamma_1$ and $\gamma_2$ are parameters to be determined. The parametrised eqns. (6) and (7) may be applied together with the registered measurements of the pH and temperature of the aqueous mineral acid solution and the registered amounts of solid fly ash, S, added to the aqueous mineral acid solution to determine the parameters $\beta_1$, $\beta_2$, $\gamma_1$, and $\gamma_2$ by non-linear regression analysis. When these parameters are determined, eqns. (6) and (7) may be combined and reformulated to provide an expression of added amount of solid fly ash as a function of the pH of the suspension/aqueous mineral acid solution. This relation may then be applied to determine the total amount, $S_{tot}$, to be added to the aqueous mineral acid solution to arrive at the selected target pH, $pH_{targ}$:

$$S_{tot} = \frac{L}{2\gamma_2}[\gamma_1 + \sqrt{\gamma_1{}^2 + 4\gamma_2(\frac{\beta_1-(10^{-pH_{targ}})^2}{\beta_2})}\,] \qquad (8)$$

The determination of the parameters $\beta_1$, $\beta_2$, $\gamma_1$, and $\gamma_2$ by regression analysis should include at least three measurements of the pH and temperature as a function of added amount of solid fly ash to be able to obtain sufficiently accurate parameters to provide a representative determination of $S_{tot}$. The method according to first aspect of the invention sets thus N = 3 or higher to enable using the regression analysis with at least three successive additions of an amount $S_n$ of fly ash and subsequent measurements of the corresponding pH and temperature change in the aqueous mineral acid solution before applying the regression analysis and subsequent use of eqn. (8) to determine $S_{tot}$. However, the regression analysis becomes refined and more reliable the more measurements being used in the analysis, such that the number N of successive additions of $S_n$ and subsequent measurements of the corresponding pH and temperature change in the aqueous mineral acid solution may advantageously be any integer from (and including) 3 to (and including) 10, preferably from 4 to 8, more preferably from 5 to 7.

The N additions of $S_n$ should not lead to the accumulated amount $S_{n, acc}$ becoming larger than the $S_{tot}$ required to reach the selected target pH. The amount $S_n$ should thus not be larger than about 1/10 of $S_{tot}$, preferably smaller. One way of obtaining this objective is simply to make an educated guess of total amount to be added, $S_{est}$, and set $S_n$ to be k'th fraction of $S_{est}$, i.e. set:

$$S_n = \frac{S_{est}}{k} \qquad (9)$$

where k is an integer selected to be from (and including) 5 to (and including) 100, preferably from 7 to 75, more preferably from 10 to 50, and more preferably from 20 to 30.

Alternatively, the estimation of total amount to be added, $S_{est}$, may be determined by applying the acid balance (eqn. (2)) of the mineral acid. As a rule of thumb, the number N of successive additions $S_n$ and measurements of pH and T to be made before executing the regression analysis to determine $S_{tot}$, may advantageously be chosen to be about half the selected value for k. Then the risk of obtaining a $S_{n, acc}$ being larger than $S_{tot}$ becomes very small and at the same time obtain sufficient empirical determinations of the pH and temperature response of the aqueous mineral acid solution to obtain an acceptable representative determination of $S_{tot}$. There is no need for making each addition,

$S_n$, of fly ash equally large. The method according to the first aspect of the invention will function equally well as long as the accumulated amount does not significantly overshoot the required $S_{tot}$ to reach the selected target pH and as long as each amount $S_n$ being added is measured and accounted for in the accumulated amount $S_{n, acc}$.

The amount $S_n$ of each successive addition of fly ash may advantageously be made relatively small after having made approximately ¾ of the k additions to avoid that the stop criteria; $S_{n, acc} < S_{tot}$ does not lead to the final successive addition of fly ash being so large that the $S_{n, acc}$ significantly overshoots the empirically determined maximum amount $S_{tot}$. This may in one embodiment be obtained by setting $S_n = \dfrac{S_{est}}{ak}$, where a is an integer selected to be from 2 to 10, preferably from 3 to 10, more preferably from 5 to 10, when n becomes equal to or larger than the greatest integer less than or equal to ¾ of k, i.e. when $n \geq \lfloor 0.75k \rfloor$. The parenthesis $\lfloor x \rfloor$ as used herein, denotes the floor function which returns the greatest integer less than or equal to a real number x.

The method according to the first aspect may further comprise a refinement of the determination of $S_{tot}$ by performing a new measurement of pH and T and then determining the parameters $\beta_1$, $\beta_2$, $\gamma_1$, and $\gamma_2$ and applying these to determine $S_{tot}$ once more after each successive addition larger than N, i.e. which follows after the first determination of $S_{tot}$ in step 5). This may be obtained by adding a step jj) to be executed after step j) and before step jjj) in step 6):

jj) when the added amount $S_n$ is dissolved, measuring and registering the temperature and pH of the aqueous mineral acid solution at this n'th step as $T_n$ and $pH_n$, respectively, and determining and registering an accumulated amount of fly ash, $S_{n, acc}$, being added to the aqueous mineral at this n'th step, and then repeat steps 4) and 5) to provide a refined determination of $S_{tot}$.

This refinement provides the advantage that each addition of $S_n$ and following registration of how the pH and T of aqueous mineral acid solution responds to the added fly ash being made until $S_{tot}$ is achieved, are being applied in the regression analysis such that the determination of $S_{tot}$ includes maximum available empirical data over the entire range of accumulated amount of added fly ash. I.e., the estimate of $S_{tot}$ is thus based on real time modelling of all available datasets from the actual process run while ongoing. In this manner, the regulation of the feed of fly ash becomes independent of prior knowledge of the composition of the fly ash being added, optionally also of the concentration of the mineral acid being applied, and adapts automatically to the variations in the fly ash composition by being made according to empirical information on how the temperature and the pH of suspension under formation responds to the addition of the fly ash from beginning to the end of the addition of fly ash. This example embodiment of the regulation is thus well suited to be used when the solid fly ash being applied is e.g. known to have relatively huge variations in the composition such as e.g. MSWI-fly ash. The formation of the suspension may advantageously comprise stirring of the aqueous mineral acid solution during addition of the solid fly ash, by use of an impeller, gas stirring, or in any other known or conceivable manner.

The aqueous mineral acid solution applied to dissolve dissolvable compounds in the fly ash may advantageously be a strong acid to provide a high capacity for solving the basic compounds in the fly ash. In practice, the mineral acid should have an initial pH of 2 or lower to enable solving sufficient amounts of the (metal containing) basic salts in the fly ash, preferably an initial pH of 1.5 or lower, and most preferably an initial pH of 1.0 or lower. The leaching, i.e. the dissolution rate of fly ash, may be enhanced by adding one or more oxidizing agents to the aqueous mineral acid solution, such as e.g. $O_3$, $H_2O_2$, or any other known and conceivable oxidizing agent.

The invention may apply any mineral acid, preferably a mineral acid such as e.g. hydrochloric acid, nitric acid, or other mineral acid. The mineral acid may advantageously be a waste fraction from other industrial processes, such as e.g. hydrochloric acid formed when scrubbing combustion gases from incineration of municipal waste.

In a second aspect, the invention relates to a dissolution reactor for forming a suspension of partly dissolved fly ash in an aqueous mineral acid solution, comprising:

a reactor space (1) adapted to receive and contain a mass, L, of the aqueous mineral acid solution at initial concentration, $C_0$, and initial pHo,

a pH-sensor (2) adapted to measure and register the pH in the aqueous mineral acid solution, and optionally a temperature sensor (3) adapted to measure and register the temperature of the aqueous mineral acid solution, and,

a supply of solid fly ash (4) adapted to feed an amount $S_n$ of solid fly ash into the aqueous mineral acid solution in the dissolution unit to form a suspension at a controlled flow rate and to register the accumulated mass, $S_{n, acc}$, of solid fly ash being added,

a supply (5) of aqueous mineral acid solution adapted to feed the amount L of aqueous mineral acid solution to the reactor space (1), and

a control unit (6), which is:

adapted to receive the registered the pH-values from the optional pH-sensor (2), and optionally the registered temperatures from the temperature sensor (3), and

adapted to regulate the supply of solid fly ash (4) and optionally the supply (5) of aqueous mineral acid solution, and which:

comprises a computer hardware with computer software contains instructions which when executed, utilises the registered pH from the pH sensor (2), and optionally the temperatures from the optional temperature sensor (3), and controls the supply of solid fly ash (4) to regulate the feed of solid fly ash according to the method of the first aspect of the invention.

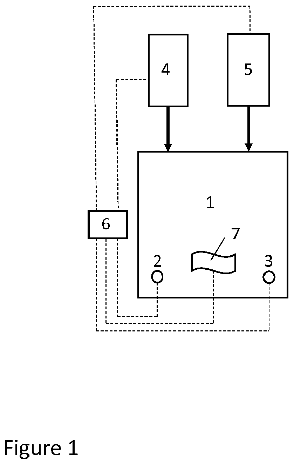

The dissolution reactor according to the second aspect of the invention is schematically illustrated in figure 1, and may operate as follows: The reactor space (1) which is adapted to receive and contain a mass L of aqueous mineral acid solution is filled with mineral acid solution from a mineral acid supply (5). The mineral acid supply may advantageously be controlled by the control unit (6), or alternatively be operated manually or by another process control unit. When the reactor space (1) has received the mass L of mineral acid, the control unit (6) engages the supply (4) of solid fly ash to initiate feeding solid fly ash to the aqueous mineral acid solution. The supply (4) measures and registers the mass flow solid fly ash being added to the acid to determine the accumulated mass, S which has been added. This information is passed to the control unit (6). The temperature sensor (3) and optionally the pH-sensor (3) measures and registers the temperature, and optionally the pH of the aqueous mineral acid solution before and at successive intervals of time during the entire feeding of the fly ash, and passes this information to the control unit (6). The control unit (6) applies this information and executes the instructions in its computer software to regulate the feed of solid fly ash to form the suspension. The dissolution reactor according to the second aspect of the invention may advantageously further comprise an impeller (7) for stirring the mineral acid during the formation of the suspension. The operation of the impeller may advantageously be controlled by the control unit (6).

In a third aspect of the invention, the method for extracting one or more metals from solid fly ash, wherein the method comprises:

selecting a target pH, $pH_{targ}$, providing an optimized dissolution rate of those salts in the fly ash containing the one or more metals to be extracted and form a suspension according to any of claims 1 to 10,
passing the formed suspension to a separator separating the suspension into a solid fraction of undissolved fly ash and a first liquid fraction containing dissolved fly ash,
disposing the solid fraction of undissolved fly ash,
adding a base to the first liquid fraction to increase the pH to a level where one or more solved metals in the first liquid fraction precipitates as metal hydroxides,
passing the first liquid fraction with precipitated metal hydroxides to a separator separating the first liquid fraction with precipitated metal hydroxides into a solid fraction of precipitated metal hydroxides, and a second liquid fraction, and
collecting, and optionally passing the solid fraction of precipitated metal hydroxides to further processing.

The term "selecting a target pH, $pH_{targ}$, providing an optimized dissolution rate" as used herein, means that the final pH of the suspension to be obtained by the addition of solid fly ash is aimed at providing the maximum dissolution rate of the one or more salts in the solid fly ash containing the one or more metals to be extracted.

The process steps of separation of the suspension into a liquid fraction and then to separate at least parts of the liquid's content of metal ions by increasing the pH until they precipitate as metal hydroxides followed by separating and collecting the precipitated metal hydroxides, such process steps have been in industrial use and is thus well known to the person skilled in the art.

The invention according to the third aspect may apply any known or conceivable method for separating solids and liquid of the suspension, such as e.g. filtration. Likewise, the invention may apply any known or conceivable method for separating precipitated solids from a liquid phase. The separation of precipitated metal hydroxides from the liquid residue may be obtained in any known or conceivable manner, such as e.g. filtering, centrifuging, settling, gas stirring, etc. The separated and collected precipitated metal hydroxides may be passed to a post-processing and or refining to be converted to commercial commodities. Typical examples of commercial commodities which may be made from the precipitated metal hydroxides include, but are not limited to, elemental metals such as Al, Ca, K, Na, Si, Cr, Cu, Pb, Zn, or an oxide, or a hydroxide, or a chloride thereof. Of these, chemical compounds of one or more of the elements Al, Zn, Pb, and Cu are especially preferred commercial commodities of interest for the present invention.

The major part of the heavy metal content of fly ash is solvable in strong acids. The solid fraction separated from the suspension thus consists mainly of remains considered non-hazardous to the environment and may be disposed as ordinary waste in land-fills, or alternatively, it may be applied as raw material in other industrial processes in any known or conceivable manner.

The precipitation of metal hydroxides may advantageously be performed in a precipitation reactor having one or more pH-sensors to enable regulating the precipitation process. The solubility of most metal hydroxides shows a marked dependence on pH and tends toward a minimum with increasing pH [ref 2]. For example, the solubility of hydroxides of non-amphoteric elements such as e.g. Ca and Be have a decreasing solubility with increased pH up to around pH = 8, hydroxides of amphoteric elements such as Al, Cs, Co, Cu, Ni, Pb, Zn, or Sn has a minimum solubility at around pH = 7, and the solubility of oxyanion-forming elements such as e.g. Cr, Mn, Mo, Sb, V, Ag, Se, or W, do not decrease before pH becomes above around pH = 10. This feature enables precipitating tailored compositions of metal hydroxides by adding base to reach one or several predetermined pH-levels. For example, a first metal hydroxide or mixture of metal hydroxides may be precipitated by adding base to reach a first predetermined pH and then separating and collecting the precipitated hydroxides, and then adding further base to precipitate a second metal hydroxide or mixture of metal hydroxides at a second predetermined pH, etc.

The invention may advantageously apply a strong base, selected from one or a mixture of the following: NaOH, KOH, $Ca(OH)_2$, CaO, or $Mg(OH)_2$, as addition to the first liquid fraction and cause metals to precipitate. The addition of base may advantageously be combined with stirring the liquid residue from the solid-liquid separation by use of an impeller, gas stirring, or in any other known or conceivable manner.

The second liquid residue usually contains valuable rest-fractions of metals since the solubility of the metal hydroxides are not zero. The method according to the third aspect of the invention may thus further comprise a post-processing of the liquid residue from the separation of the precipitated metal hydroxides, comprising:

mixing the second liquid fraction with solid magnetic particles having one or more adsorbents on their surface which selectively adsorbs the metal ions to be extracted,

feeding the mixture of magnetic particles and the second liquid residue to a magnetic separator separating the mixture into a fraction of magnetic particles and a third liquid fraction,

desorbing the adsorbed metal ions from the adsorbents on the magnetic particles and collect the desorbed metal ions as a product fraction,

disposing the third liquid fraction, and optionally,

regenerating the one or more adsorbents on the desorbed magnetic particles.

The magnetic particles, may advantageously have a dso particle size in the range of from 10 nm to 10 $\mu$m, preferably from 50 nm to 5 $\mu$m, and most preferably from 100 nm to 1 $\mu$m, and they may either be ferromagnetic, ferrimagnetic, superparamagnetic or combinations of these properties. As used herein, the term "dso particle size" means the median diameter of the particle size distribution. For example, if D50=10 um, then 50% of the particles in the sample are larger than 10 um and 50% are smaller than 10 um. The particle size distribution may be determined according to standards ASTM E2651-13 or ISO 13317-1-2001.

The mixing of magnetic particles and liquid may be obtained by stirred tanks, static mixers, tubular reactors or combinations. The magnetic particles may be separated from the liquid by means of appropriate magnetic fields, either set up by permanent magnets or electromagnets in any known or conceivable manner.

The adsorbent on the particle surface depends on which metallic ions that are to be adsorbed. The invention may apply any known or conceivable adsorbent able to adsorb metallic ions from an aqueous solution. Examples of suited adsorbents include, but is not limited to; polyaspartic acid, polystyrenesulfonate, chitosan, polyacrylamide, or non-coated magnetite or elemental iron particles, and mixtures thereof.

The particles and adsorbed metal ions are separated by means of one or several known techniques typically including a first step of exposing the magnetic particles with adsorbed metal ions to an environment that facilitates desorption. In principle, this could be an acidic or basic solution, or an organic solvent. In some systems, the contaminants may be exposed to an environment that facilitate reaction with the contaminants, causing the contaminants to release from the adsorbents.

After desorption, the magnetic particles may advantageously be washed, dried, quality checked and then, if necessary, subject to a surface conditioning process restoring the surface properties of the particles. The surface conditioning may comprise coating new adsorbent etc. Particles that pass the quality control and thus considered to be practically indistinguishable from new and unused particles, may advantageously be transferred to a particle reservoir for later use.

The third liquid fraction exiting the separator is usually sufficiently stripped of heavy metals to be considered a non-hazardous material, and may be disposed as a non-hazardous waste. However, the third liquid fraction contains often sufficient Cl-ions to be desalinated to form road salt or other products.

In a fourth aspect of the invention, the dissolution reactor according to the second aspect is implemented in a plant for extracting metals from fly ash, by the dissolution reactor according to the second aspect further comprising:

a first separator (8) adapted to separate the suspension (9) formed in the dissolution reactor (1) into a solid fraction (10) of undissolved fly ash and a first liquid fraction (11) containing dissolved fly ash,

a precipitation reactor (12) adapted to receive the first liquid fraction (11),

a supply of a base (13) adapted to add base to the first liquid fraction (11) contained in the precipitation reactor (12), a second separator (14) adapted to receive the liquid fraction containing precipitated metal hydroxides (15) and to separate it into a solid fraction (16) of precipitated metal hydroxides and a second liquid fraction (17).

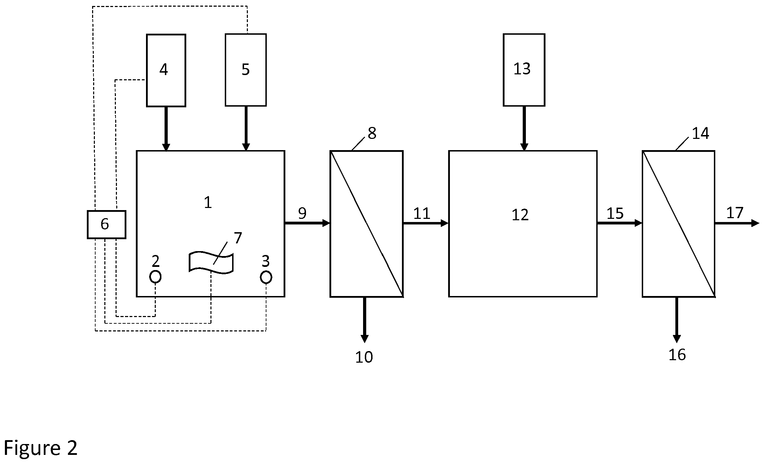

The plant according to the fourth aspect of the invention is schematically illustrated in figure 2. As seen on the figure, the plant comprises a similar dissolution reactor for producing a suspension (9) as described above for the second aspect of the invention. The formed suspension (9) is passed into a first separator (8) which separates the suspension (9) into a solid fraction (10) consisting of the undissolved remains of the fly ash, and a first liquid fraction (11) consisting of the aqueous mineral acid solution and the dissolved fly ash. The first liquid fraction (11) is passed on to a precipitation reactor (12) where the pH of the first liquid fraction is increased by adding one or more bases from a base supply (13) to make at least parts of the solved metals to precipitate in the form of solid metal hydroxides. The liquid fraction (15) having precipitated metal hydroxides is then passed on to a second separator (14) which separates the liquid fraction (15) having precipitated metal hydroxides into a solid fraction (16) of precipitated metal hydroxides and a second liquid fraction (17).

As described above for the third aspect of the invention, the separators (8, 14), precipitation reactor (12) and the supply of base (13), are commonly applied process equipment well known to the person skilled in the art. The invention according to the fourth aspect may apply any known or conceivable separator, precipitation reactor.

As described above for the third aspect of the invention, the second liquid fraction (17) exiting the second separator (14) usually contains valuable rest fractions of metal ions. The invention according to the fourth aspect may thus further comprise:

> a supply (19) of magnetic particles having one or more metal ion adsorbing adsorbents on their surface,
> a mixing tank (18) adapted to receive the second fluid fraction (17) and magnetic particles from supply (19) and to mix the liquid and particles,
> a magnetic separator (22) adapted to receive the mixture (21) of the second liquid fraction and magnetic particles, and to separate the mixture (21) into a solid fraction (25) of magnetic particles and a third liquid fraction (24).

The mixing of particles and liquid in mixing tank (18) may advantageously be enhanced by use of an impeller (20).

The magnetic particles and adsorbents may advantageously be the same as described above for the third aspect of the invention. Likewise, the plant according to the fourth aspect of the invention may further comprise any process equipment for regenerating used magnetic particles (fraction (25)) and pass them into supply (19) for reuse, and/or for extracting the adsorbed metal ions and converting them into commercial commodities as described above.

### List of figures

Figure 1 is a schematic drawing of an example embodiment of a dissolution reactor according to the invention.

Figure 2 is a schematic drawing of an example embodiment of implementation of the dissolution reactor shown in figure 1 into a plant for extracting metal content from fly ash.

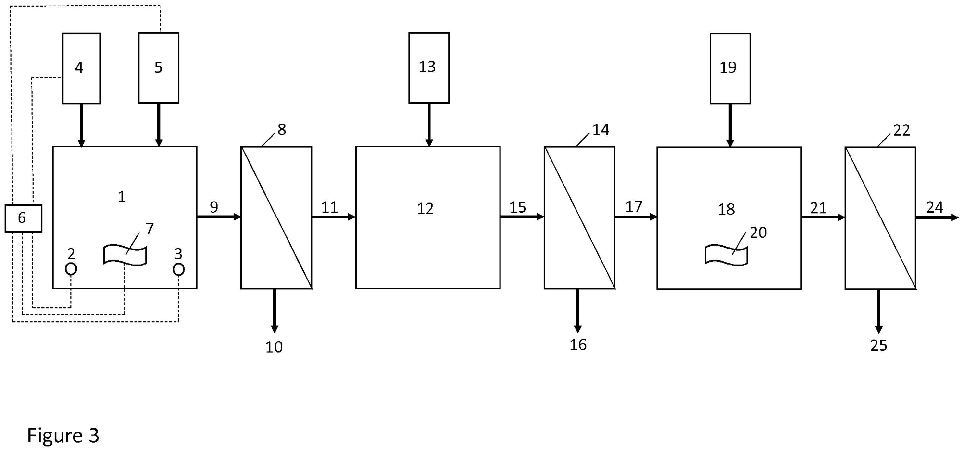

Figure 3 is a schematic drawing of the same plant as shown in figure 2, but with mixing reactor and magnetic separator unit for extraction of rest fractions of metal ions.

### Verification of the invention

A series of four laboratory tests were performed to verify the regulation of addition of fly ash according to the first aspect of the invention. Each test applied 3000 ml of concentrated or nearly concentrated hydrochloric acid having an initial pH of from -1 to 0, as the aqueous mineral acid solution and having a temperature around 20 °C (ambient room temperature).

Then, successive amounts, $S_n$, of solid MSWI fly ash from the incineration plant for municipal waste at Haraldrud in Oslo, Norway was added to the HCl-acid under stirring. The composition of the fly ash was not determined, i.e. the verification tests were carried out with unknown contents of dissolvable basic salts in the fly ash being added. After each successive addition and mixing of fly ash into the HCl-acid, the pH and temperature of the resulting suspension/aqueous mineral acid solution was measured using a Thermo Scientific Eutech pH 450 equipped with both a pH-sensor and a thermometer.

After five successive additions $S_n$ of fly ash (i.e. N = 5) and subsequent measurements of resulting pH and temperature, the empirical data and eqns. (6) and (7) were applied to determine the parameters $\beta_1$, $\beta_2$, $\gamma_1$, and $\gamma_2$ by a Gauss-Newton algorithm, and the determined parameters $\beta_1$, $\beta_2$, $\gamma_1$, and $\gamma_2$ were applied in eqn. (8) to determine $S_{tot}$. In addition, the determined parameters $\beta_1$ and $\beta_2$, were applied in eqn. (6) to determine a target temperature increase, $\Delta T_{targ}$, to be reached when obtaining the selected target pH, i.e. to determine $\Delta T_{targ}$ from the relation:

$$(10^{-pH_{targ}})^2 = \beta_1 - \beta_2 \Delta T_{targ}$$

Table 1 Results of test 1, selected target pH: 1.3

| n | Measured | | | Modelled | | | | | |
|---|---|---|---|---|---|---|---|---|---|
| | $S_{n,\,acc}$ [g] | $pH_n$ | $\Delta T_n$ [°C] | $\Delta T_{targ}$ [°C] | $S_{tot}$ [g] | $\beta_1$ | $\beta_2$ | $\gamma_1$ | $\gamma_2$ |
| 1 | 61.5 | -0.1 | 1.8 | | | | | | |
| 2 | 102.5 | -0.1 | 3.2 | | | | | | |
| 3 | 143.6 | 0.0 | 4.6 | | | | | | |
| 4 | 164.1 | 0.0 | 5.4 | | | | | | |
| 5 | 225.6 | 0.1 | 7.9 | 11.3 | 301.6 | 1.946 | 0.172 | 82.2 | -303.4 |
| 6 | 246.1 | 0.1 | 8.6 | 12.1 | 322.9 | 1.891 | 0.156 | 84.1 | -262.6 |
| 7 | 266.6 | 0.1 | 9.3 | 12.9 | 345.9 | 1.840 | 0.143 | 86.5 | -219.7 |
| 8 | 287.1 | 0.1 | 10.0 | 13.7 | 370.6 | 1.788 | 0.130 | 88.9 | -179.1 |
| 9 | 307.1 | 0.2 | 10.8 | 13.8 | 375.8 | 1.785 | 0.129 | 90.5 | -155.1 |
| 10 | 328.1 | 0.3 | 11.6 | 13.7 | 376.1 | 1.792 | 0.131 | 91.6 | -139.4 |
| 11 | 348.6 | 0.5 | 12.1 | 13.4 | 375.8 | 1.812 | 0.135 | 94.4 | -102.3 |
| 12 | 369.1 | 0.8 | 12.6 | 13.3 | 377.8 | 1.827 | 0.137 | 97.8 | -60.5 |
| 13 | 379.4 | 1.3 | 12.2 | 13.1 | 382.6 | 1.845 | 0.141 | 103.3 | 5.9 |

The determination of $S_{tot}$ and $\Delta T_{targ}$ was refined by repeating the determination of the parameters $\beta_1$, $\beta_2$, $\gamma_1$, and $\gamma_2$ by the Gauss-Newton algorithm after each additional addition and mixing of $S_n$ until the selected target pH was obtained in the suspension/aqueous mineral acid solution. The results and added amounts, $S_n$, are summarized in tables 1 to 4 below.

The results given in Table 1 show that the method according to the first aspect of the invention is able to fairly accurate utilize measurements of how the pH and temperature of aqueous mineral acid responds to successive additions of fly ash, and to utilize this empirically determined response to determine a threshold value for how much fly ash to be added in order to obtain a selected target pH (which usually is selected to represent an optimal dissolution degree of one or more metallic salt(s) which is/are to be extracted from the fly ash). The threshold value determined by the method, $S_{tot}$, is within 1 % from the measured accumulated amount $S_{n,\,acc}$ being when the selected target pH, $pH_{targ}$, is obtained. Thus, even though the pH-measurements are applied as stop criterium in the example embodiment, instead of the accumulated amount $S_{n,\,acc}$, the example embodiment show that the method according to the first aspect of the invention provides a method for regulation the feed of fly ash to obtain an optimized dissolution degree of the metal salts to be extracted from the fly ash.

The importance of including the temperature response in the early stage of the fly ash addition, when the pH-measurements are less reliable, is illustrated by the results of the three next example embodiments presented in tables 2, 3 and 4, respectively. In these example embodiments 2, 3 and 4, it was added a relatively large portion of fly ash in the early stage such that the regression analysis was fed with scarce empirical data over the temperature response at the early stage of the addition. As a result, both the modelled temperature $\Delta T_{targ}$ and the modelled total amount of fly as, $S_{tot}$, became slightly overestimated (by 5 to 10 %) as compared to the registered temperature when terminating the addition. This illustrates that to obtain the best fit for the temperature model, datasets should be recorded and evaluated at relatively equal intervals in S throughout the process. To minimize deviations due to heat loss, it is advantageous to attempt maintaining a relatively constant fly ash feed rate.

The results from all four tests demonstrates that the measured temperature can be used actively in control algorithms for the leaching of fly ash in acid to support the pH measurements is feasible and preferable.

Table 2 Results of test 2, selected target pH: 1.2

| n | Measured | | | Modelled | | | | | |
|---|---|---|---|---|---|---|---|---|---|
| | $S_{n, acc}$ [g] | $pH_n$ | $\Delta T_n$ [°C] | $\Delta T_{targ}$ [°C] | $S_{tot}$ [g] | $\beta_1$ | $\beta_2$ | $\gamma_1$ | $\gamma_2$ |
| 1 | 22.8 | -0.2 | 0.5 | | | | | | |
| 2 | 91.0 | -0.1 | 3.1 | | | | | | |
| 3 | 136.5 | -0.1 | 4.5 | | | | | | |
| 4 | 204.8 | -0.1 | 6.8 | | | | | | |
| 5 | 273.1 | 0.0 | 9.3 | 16.2 | 458.4 | 2.355 | 0.145 | 95.9 | -66.8 |
| 6 | 341.3 | 0.1 | 12.2 | 16.5 | 445.7 | 2.344 | 0.142 | 91.9 | -127.9 |
| 7 | 364.1 | 0.6 | 12.6 | 14.8 | 415.2 | 2.426 | 0.164 | 94.8 | -87.3 |
| 8 | 375.5 | 0.9 | 12.7 | 14.1 | 405.5 | 2.466 | 0.174 | 97.6 | -51.1 |
| 9 | 386.8 | 1.2 | 12.6 | 13.8 | 404.3 | 2.490 | 0.181 | 101.5 | -4.0 |

Table 3 Results of test 3, selected target pH: 1.2

| n | Measured | | | Modelled | | | | | |
|---|---|---|---|---|---|---|---|---|---|
| | $S_{n, acc}$ [g] | $pH_n$ | $\Delta T_n$ [°C] | $\Delta T_{targ}$ [°C] | $S_{tot}$ [g] | $\beta_1$ | $\beta_2$ | $\gamma_1$ | $\gamma_2$ |
| 1 | 21.3 | -0.1 | 0.5 | | | | | | |
| 2 | 255.9 | 0.0 | 8.9 | | | | | | |
| 3 | 277.3 | 0.0 | 9.6 | | | | | | |
| 4 | 298.6 | 0.1 | 10.4 | | | | | | |
| 5 | 319.9 | 0.2 | 11.2 | 17.8 | 484.2 | 1.692 | 0.095 | 95.3 | -93.6 |
| 6 | 341.2 | 0.3 | 11.9 | 16.4 | 458.0 | 1.738 | 0.106 | 99.1 | -52.8 |
| 7 | 362.6 | 0.4 | 12.7 | 15.6 | 439.5 | 1.778 | 0.114 | 100.1 | -43.1 |
| 8 | 373.2 | 0.6 | 13.6 | 15.2 | 418.0 | 1.810 | 0.119 | 93.7 | -108.1 |
| 9 | 383.9 | 0.8 | 13.2 | 14.8 | 416.3 | 1.837 | 0.124 | 99.6 | -48.7 |
| 10 | 394.6 | 1.2 | 13.3 | 14.5 | 417.0 | 1.858 | 0.128 | 105.5 | 8.6 |

Table 4 Results of test 4, selected target pH; 1.5

| n | Measured | | | Modelled | | | | | |
|---|---|---|---|---|---|---|---|---|---|
| | $S_{n, acc}$ [g] | $pH_n$ | $\Delta T_n$ [°C] | $\Delta T_{targ}$ [°C] | $S_{tot}$ [g] | $\beta_1$ | $\beta_2$ | $\gamma_1$ | $\gamma_2$ |
| 1 | 20.0 | 0.0 | 0.8 | | | | | | |
| 2 | 180.3 | 0.1 | 9.6 | | | | | | |
| 3 | 200.3 | 0.1 | 10.7 | | | | | | |
| 4 | 220.3 | 0.3 | 11.9 | | | | | | |
| 5 | 240.4 | 0.5 | 12.9 | 17.2 | 311.3 | 1.119 | 0.065 | 99.7 | -69.8 |
| 6 | 260.4 | 1.0 | 13.6 | 15.9 | 302.1 | 1.156 | 0.072 | 109.4 | -25.7 |
| 7 | 270.4 | 1.5 | 13.8 | 15.3 | 298.6 | 1.178 | 0.077 | 115.6 | 85.8 |

**References**

1 Wang J, Jiang JG, Sui JC, Yang SJ, and Zhang Y. (2006), "Fundamental properties of fly ash from municipal solid waste incineration", Huan Jing Ke Xue, Nov;27(11):2283-7. [Article in Chinese]
2 Oncel MS, Muhcu A, Demirbas E, Kobya M, "A comparative study of chemical precipitation and electrocoagulation for treatment of coal acid drainage wastewater", J.Env.Chem.Eng., (1) 2013, pp. 989-995.

**Claims**

1. A method for forming a suspension of partly dissolved fly ash in an aqueous mineral acid solution, wherein the method comprises the following process steps:

    1) supplying a mass, L, of an aqueous mineral acid solution to a dissolution reactor and then measuring and registering the initial temperature, $T_0$, and initial, pHo, of the aqueous mineral acid solution,
    2) set n = 1, where n is an integer, and select a target pH, $pH_{targ}$, to be reached in the suspension,
    3) for n ≤ N, where N is an integer from 3 or higher, execute steps i), ii) and iii) in successive order:

        i) adding and mixing an amount $S_n$ of solid fly ash into the aqueous mineral acid solution,
        ii) when the amount $S_n$ is dissolved, measuring and registering the temperature and pH of the aqueous mineral acid solution at this n'th step as $T_n$ and $pH_n$, respectively, and determining and registering an accumulated amount of fly ash, $S_{n, acc}$, being added to the aqueous mineral acid solution at this n'th step, and
        iii) set n = n+1 and go to step i),

    4) apply the registered temperatures $T_0$ to $T_n$ and the registered pH-values pHo to $pH_n$, and the registered amounts of added fly ash, $S_{n, acc}$, and equations:

$$\Gamma_n^2 = \beta_1 - \beta_2 \Delta T_n \qquad \text{and} \qquad \Delta T_n = \gamma_1 \left(\frac{S_{n,acc}}{L}\right) - \gamma_2 \left(\frac{S_{n,acc}}{L}\right)^2,$$

    where $\Gamma_n = 10^{-pHn}$, $\Delta T_n = T_n - T_0$, and $\beta_1$, $\beta_2$, $\gamma_1$, and $\gamma_2$ are parameters, to determine the parameters $\beta_1$, $\beta_2$, $\gamma_1$, and $\gamma_2$ by regression analysis,
    5) determining a total amount, $S_{tot}$, of solid fly ash to be added to the aqueous mineral acid solution from the relation:

$$S_{tot} = \frac{L}{2\gamma_2} \left[\gamma_1 + \sqrt{\gamma_1{}^2 + 4\gamma_2 \left(\frac{\beta_1 - (10^{-pH_{targ}})^2}{\beta_2}\right)} \right],$$

    and
    6) if $S_{n, acc} < S_{tot}$, execute steps j) and jjj):

        j) adding and mixing an amount $S_n$ into the aqueous mineral acid solution,
        jjj) if $S_{n, acc} < S_{tot}$, set n = n+1 and go to step j),
        or else:
        jjjj) stop feeding and mixing solid fly ash into the aqueous mineral acid solution.

2. A method according to claim 1, wherein step 6) further comprises step jj) to be executed after step j) and before step jjj):
    jj) when the added amount $S_n$ is dissolved, measuring and registering the temperature and pH of the aqueous mineral acid solution at this n'th step as $T_n$ and $pH_n$, respectively, and determining and registering an accumulated amount of fly ash, $S_{n, acc}$, being added to the aqueous mineral at this n'th step, and then repeat steps 4) and 5) to provide a refined determination of $S_{tot}$.

3. A method according to claim 1 or 2, wherein the method further comprises stirring the aqueous mineral acid solution during the formation of the suspension of partly dissolved fly ash by use of an impeller or by gas stirring.

4. A method according to any preceding claim, wherein the amount $S_n$ is determined by the relation:

$$S_n = \frac{S_{est}}{k}$$

where $S_{est}$ is an estimate of the total amount of fly ash to be added, and k is an integer selected to be from (and including) 5 to (and including) 100, preferably from 7 to 75, more preferably from 10 to 50, and most preferably from 20 to 30.

5. A method according to claim 4, wherein when $n \geq [0.75k]$, the amount $S_n$ is determined by the relation:

$$S_n = \frac{S_{est}}{ak}$$

where a is an integer selected to be any integer from 2 to 10, preferably from 3 to 10, and more preferably from 5 to 10.

6. A method according to any preceding claim, wherein the estimate of total amount to be added, $S_{est}$, is determined by applying the acid balance:

$$S_{est} = \frac{L}{C_B}[C_0 - 10^{-pH_{targ}}],$$

where $C_B$ is the concentration of dissolvable base in the solid fly ash.

7. A method according to of claims 4 to 6, wherein N is chosen to be an integer being equal to k/2.

8. A method according to any of claims 1 to 6, wherein the number N is any integer from (and including) 3 to (and including) 10, preferably from 4 to 8, more preferably from 5 to 7.

9. A method according to any preceding claim, wherein the aqueous mineral acid solution is hydrochloric acid or nitric acid, or a mixture thereof, having an initial pH $\leq$ 2, preferably $\leq$ 1.5, most preferably $\leq$1.0.

10. A method according to any preceding claim, wherein one or more oxidizing agents are added to the aqueous mineral acid solution, preferably $O_3$ and/or $H_2O_2$, the addition of one or more oxidizing agents is preferably made in step 1).

11. A method for extracting one or more metals from solid fly ash, wherein the method comprises:

selecting a target pH, $pH_{targ}$, providing an optimized dissolution rate of those salts in the fly ash containing the one or more metals to be extracted and form a suspension according to any of claims 1 to 10,
passing the formed suspension to a separator separating the suspension into a solid fraction of undissolved fly ash and a first liquid fraction containing dissolved fly ash,
disposing the solid fraction of undissolved fly ash,
adding a base to the first liquid fraction to increase the pH to a level where one or more solved metals in the first liquid fraction precipitates as metal hydroxides,
passing the first liquid fraction with precipitated metal hydroxides to a separator separating the first liquid fraction with precipitated metal hydroxides into a solid fraction of precipitated metal hydroxides, and a second liquid fraction, and
collecting, and optionally passing the solid fraction of precipitated metal hydroxides to further processing.

12. A method according to claim 11, wherein the base is chosen from one of; NaOH, KOH, Ca(OH)$_2$, CaO, or Mg(OH)$_2$, or a mixture of two or more thereof.

13. A method according to claim 11 or 12, wherein
the method further comprising:

mixing the second liquid fraction with solid magnetic particles having one or more adsorbents on their surface which selectively adsorbs the metal ions to be extracted,

feeding the mixture of magnetic particles and the second liquid residue to a magnetic separator separating the mixture into a fraction of magnetic particles and a third liquid fraction,

desorbing the adsorbed metal ions from the adsorbents on the magnetic particles and collect the desorbed metal ions as a product fraction,

disposing the third liquid fraction, and

optionally,

regenerating the one or more adsorbents on the desorbed magnetic particles.

14. A dissolution reactor for forming a suspension of partly dissolved fly ash in an aqueous mineral acid solution, comprising:

a reactor space (1) adapted to receive and contain a mass, L, of the aqueous mineral acid solution at initial concentration, $C_0$, and initial $pH_0$,

a pH-sensor (2) adapted to measure and register the pH in the aqueous mineral acid solution,

a temperature sensor (3) adapted to measure and register the temperature of the aqueous mineral acid solution,

a supply of solid fly ash (4) adapted to feed subsequent amounts, $S_n$, of solid fly ash into the aqueous mineral acid solution in the reactor apace (1) and to register the accumulated mass, $S_{n,\ acc}$, of solid fly ash being added,

a supply of aqueous mineral acid solution (5) adapted to feed the amount L of aqueous mineral acid solution to the reactor space (1), and

a control unit (6), which is:

adapted to receive the registered the pH-values from the pH-sensor (2), the registered temperatures from the temperature sensor (3), and the registered accumulated mass, $S_{n,\ acc}$, of solid fly ash being added to the aqueous mineral acid solution, and which:

comprises a computer hardware with computer software containing instructions which when executed, utilise the registered pH from the pH sensor (2), the temperatures from the temperature sensor (3), and the registered accumulated mass, $S_{n,\ acc}$, of solid fly ash being added to determine the total amount of solid fly ash to be added to the aqueous mineral acid solution according to the method of any of claims 1 - 10, and which regulates the supply of solid fly ash (4) to the aqueous mineral acid solution (5) accordingly.

15. A dissolution reactor according to claim 14, further comprising an impeller (7) located in the aqueous mineral acid solution.

16. A plant for extracting metals from fly ash, comprising a dissolution reactor according to claim 14 or 15, further comprising:

a first separator (8) adapted to separate the suspension (9) formed in the dissolution reactor (1) into a solid fraction (10) of undissolved fly ash and a first liquid fraction (11) containing dissolved fly ash,

a precipitation reactor (12) adapted to receive the first liquid fraction (11),

a supply of a base (13) adapted to add base to the first liquid fraction (11) contained in the precipitation reactor (12),

a second separator (14) adapted to receive the liquid fraction containing precipitated metal hydroxides (15) and to separate it into a solid fraction (16) of precipitated metal hydroxides and a second liquid fraction (17).

17. A plant according to claim 16, further comprising:

a supply of magnetic particles (19) having one or more metal ion adsorbing adsorbents on their surface,

a mixing tank (18) adapted to receive the second fluid fraction (17) and magnetic particles from supply of magnetic particles (19) and to mix the liquid and particles,

a magnetic separator (22) adapted to receive the mixture (21) of the second liquid fraction and magnetic particles, and to separate the mixture (21) into a solid fraction (25) of magnetic particles and a third liquid fraction (24), and optionally,

an impeller (20) located in the mixing tank (18).

18. A plant according to claim 16 or 17, wherein the magnetic particles:

have a mean particle size $d_{50}$, in the range of from 10 nm to 10 $\mu$m, preferably from 50 nm to 5 $\mu$m, and most preferably from 100 nm to 1 $\mu$m, and wherein the mean particle size, $d_{50}$, means the median diameter of the particle size distribution, determined according to standards ASTM E2651-13 or ISO 13317-1-2001, and wherein the magnetic particles are either ferromagnetic, ferrimagnetic, superparamagnetic, or combinations of these properties.

**Patentansprüche**

1. Verfahren zur Bildung einer Suspension von teilweise gelöster Flugasche in einer wässrigen Mineralsäurelösung, wobei das Verfahren die folgenden Verfahrensschritte umfasst:

> 1) Zuführen einer Masse, L, einer wässrigen Mineralsäurelösung zu einem Auflösungsreaktor und danach Messen und Aufzeichnen der Anfangstemperatur, $T_0$, und des Anfangs-pH, $pH_0$, der wässrigen Mineralsäurelösung,
> 2) Einstellen von n=1, wobei n eine ganze Zahl ist, und Auswählen eines Ziel-pHs, $pH_{targ}$, der in der Suspension erreicht werden soll,
> 3) für $n \leq N$, wobei N eine ganze Zahl von 3 oder höher ist, Ausführen der Schritte i), ii) und iii) nacheinander:
>
>> i) Zugeben und Einmischen einer Menge $S_n$ an fester Flugasche in die wässrige Mineralsäurelösung,
>> ii) wenn die Menge $S_n$ gelöst ist, Messen und Aufzeichnen der Temperatur und des pHs der wässrigen Mineralsäurelösung in diesem n.Schritt als $T_n$ bzw. $pH_n$ und Bestimmen und Aufzeichnen einer akkumulierten Menge an Flugasche, $S_{n,acc}$, die in diesem n.Schritt zu der wässrigen Mineralsäurelösung gegeben wird, und
>> iii) Einstellen von n=n+1 und Weitergehen zu Schritt i),
>
> 4) Anwenden der aufgezeichneten Temperaturen $T_0$ zu $T_n$ und der aufgezeichneten pH-Werte $pH_0$ zu $pH_n$ und der aufgezeichneten Mengen an zugesetzter Flugasche, $S_{n,acc}$, und der Gleichungen:

$$\Gamma_n^2 = \beta_1 - \beta_2 \Delta T_n \quad \text{und} \quad \Delta T_n = \gamma_1 \left(\frac{S_{n,acc}}{L}\right) - \gamma_2 \left(\frac{S_{n,acc}}{L}\right)^2,$$

> worin $\Gamma_n = 10^{-pH_n}$, $\Delta T_n = T_n - T_0$ und $\beta_1$, $\beta_2$, $\gamma_1$ und $\gamma_2$ Parameter sind, um die Parameter $\beta_1$, $\beta_2$, $\gamma_1$ und $\gamma_2$ durch Regressionsanalyse zu bestimmen,
> 5) Bestimmen einer Gesamtmenge, $S_{tot}$, an fester Flugasche, die der wässrigen Mineralsäurelösung zugegeben werden soll, aus der Beziehung:

$$S_{tot} = \frac{L}{2\gamma_2}\left[\gamma_1 + \sqrt{\gamma_1^2 + 4\gamma_2\left(\frac{\beta_1 - (10^{-pH_{targ}})^2}{\beta_2}\right)}\right],$$

> und
> 6) wenn $S_{n,acc} < S_{tot}$, Ausführen von Schritten j) und jjj) :
>
>> j) Zugeben und Einmischen einer Menge $S_n$ in die wässrige Mineralsäurelösung,
>> jjj) wenn $S_{n,acc} < S_{tot}$, Einstellen von n = n+1 und Weitergehen zu Schritt j),
>> oder aber:
>> jjjj) Beenden des Zuführens und des Einmischens von fester Flugasche in die wässrige Mineralsäurelösung.

2. Verfahren nach Anspruch 1, wobei Schritt 6) ferner umfasst, dass Schritt jj) nach Schritt j) und vor Schritt jjj) durchzuführen ist:
jj) wenn die zugegebene Menge $S_n$ gelöst ist, Messen und Aufzeichnen der Temperatur und des pHs der wässrigen Mineralsäurelösung in diesem n'. Schritt als $T_n$ bzw. $pH_n$ und Bestimmen und Aufzeichnen einer akkumulierten Menge an Flugasche, $S_{n,\ acc}$, die dem wässrigen Mineral in diesem n'.Schritt zugesetzt wird, und danach Wiederholen von Schritten 4) und 5), um eine verfeinerte Bestimmung von $S_{tot}$ bereitzustellen.

3. Verfahren nach Anspruch 1 oder 2, wobei das Verfahren ferner Rühren der wässrigen Mineralsäurelösung während der Bildung der Suspension von teilweise gelöster Flugasche durch Verwendung eines Impellers oder durch Gasrühren umfasst.

**4.** Verfahren nach einem vorangehenden Anspruch, wobei die Menge $S_n$ durch die Beziehung:

$$S_n = \frac{S_{est}}{k}$$

worin $S_{est}$ eine Schätzung der Gesamtmenge an Flugasche, die zugesetzt werden soll, ist und k eine ganze Zahl, ausgewählt aus (und einschließlich) 5 bis (und einschließlich) 100, vorzugsweise 7 bis 75, bevorzugter 10 bis 50 und äußerst bevorzugt 20 bis 30, ist, bestimmt wird.

**5.** Verfahren nach Anspruch 4, wobei, wenn n $\geq$ [0,75k], die Menge $S_n$ durch die Beziehung:

$$S_n = \frac{S_{est}}{ak}$$

worin a eine ganze Zahl, ausgewählt aus einer ganzen Zahl von 2 bis 10, vorzugsweise von 3 bis 10 und bevorzugter von 5 bis 10, ist, bestimmt wird.

**6.** Verfahren nach einem vorangehenden Anspruch, wobei die Schätzung der zuzusetzenden Gesamtmenge, $S_{tot}$, bestimmt wird, indem das Säuregleichgewicht angewendet wird:

$$S_{est} = \frac{L}{C_B}[C_0 - 10^{-pH_{targ}}],$$

worin $C_B$ die Konzentration an in der festen Flugasche auflösbaren Base ist.

**7.** Verfahren nach Ansprüchen 4 bis 6, wobei N so gewählt wird, dass es eine ganze Zahl ist, die gleich k/2 ist.

**8.** Verfahren nach einem der Ansprüche 1 bis 6, wobei die Zahl N eine beliebige ganze Zahl von (und einschließlich) 3 bis (und einschließlich) 10, vorzugsweise von 4 bis 8, bevorzugter von 5 bis 7 ist.

**9.** Verfahren nach einem vorangehenden Anspruch, wobei die wässrige Mineralsäurelösung Chlorwasserstoffsäure oder Salpetersäure oder ein Gemisch davon mit einem Anfangs-pH $\leq$ 2, vorzugsweise $\leq$ 1,5, äußerst bevorzugt $\leq$ 1,0 ist.

**10.** Verfahren nach einem vorangehenden Anspruch, wobei ein oder mehrere Oxidationsmittel, vorzugsweise $O_3$ und/oder $H_2O_2$, zu der wässrigen Mineralsäurelösung gegeben wird/werden, die Zugabe eines oder mehrerer Oxidationsmittel vorzugsweise in Schritt 1) erfolgt.

**11.** Verfahren zum Extrahieren eines Metalls oder mehrerer Metalle aus fester Flugasche, wobei das Verfahren umfasst:

Auswählen eines Ziel-pHs, $pH_{targ}$, Bereitstellen einer optimierten Auflösungsrate von solchen Salzen in der Flugasche, die das eine Metall oder die mehreren Metalle, das/die extrahiert werden soll/en, enthalten und Bilden einer Suspension nach einem der Ansprüche 1 bis 10,
Leiten der gebildeten Suspension zu einem Separator, der die Suspension in eine feste Fraktion von ungelöster Flugasche und eine erste flüssige Fraktion, die gelöste Flugasche enthält, trennt,
Verwerfen der festen Fraktion von ungelöster Flugasche,
Zugeben einer Base zu der ersten flüssigen Fraktion, um den pH zu ein Level zu erhöhen, an dem ein gelöstes Metall oder mehrere gelöste Metalle in der ersten flüssigen Fraktion als Metallhydroxide präzipitieren,
Leiten der ersten flüssigen Fraktion mit präzipitierten Metallhydroxiden zu einem Separator, der die erste flüssige Fraktion mit präzipitierten Metallhydroxiden in eine feste Fraktion von präzipitierten Metallhydroxiden und eine zweite flüssige Fraktion trennt, und

Sammeln und gegebenenfalls Leiten der festen Fraktion von präzipitierten Metallhydroxide zur weiteren Verarbeitung.

12. Verfahren nach Anspruch 11, wobei die Base ausgewählt ist aus einem von NaOH, KOH, $Ca(OH)_2$, CaO oder $Mg(OH)_2$ oder einem Gemisch von zwei oder mehreren davon.

13. Verfahren nach Anspruch 11 oder 12, wobei das Verfahren ferner umfasst:

Mischen der zweiten flüssigen Fraktion mit festen magnetischen Partikeln, die ein Adsorbens oder mehrere Adsorbentien an ihrer Oberfläche haben, das/die selektiv die zu extrahierenden Metallionen adsorbiert/adsorbieren,
Einspeisen des Gemisches fester magnetischer Partikel und des zweiten flüssigen Rückstandes in einen Separator, der der das Gemisch in eine Fraktion magnetischer Partikel und eine dritte flüssige Fraktion trennt,
Desorbieren der adsorbierten Metallionen von den Adsorbentien an den magnetischen Partikeln und Sammeln der desorbierten Metallionen als Produktfraktion,
Verwerfen der dritten flüssigen Fraktion,
und gegebenenfalls
Regenerieren des einen Adsorbens oder der mehreren Adsorbentien an den desorbierten magnetischen Partikeln.

14. Auflösungsreaktor zur Bildung einer Suspension von teilweise gelöster Flugasche in einer wässrigen Mineralsäurelösung, umfassend:

einen Reaktorraum (1), der angepasst ist, um eine Masse, L, der wässrigen Mineralsäurelösung mit Anfangskonzentration, $C_0$, und Anfangs-$pH_0$ aufzunehmen und zu enthalten,
einen pH-Sensor (2), der angepasst ist, um den pH der wässrigen Mineralsäurelösung zu messen und aufzuzeichnen,
einen Temperatursensor (3), der angepasst ist, um die Temperatur der wässrigen Mineralsäurelösung zu messen und aufzuzeichnen,
eine Zuführung für feste Flugasche (4), die angepasst ist, um anschließende Mengen, $S_n$, an fester Flugasche in die wässrige Mineralsäurelösung in dem Reaktorraum (1) einzuspeisen und die akkumulierte Masse, $S_{n,acc}$, von fester Flugasche, die zugegeben wird, aufzuzeichnen,
eine Zuführung für wässrige Mineralsäurelösung (5), die angepasst ist, um die Menge L an wässriger Mineralsäurelösung in den Reaktorraum (1) einzuspeisen, und
eine Steuereinheit (6), welche ist:
angepasst, um die aufgezeichneten pH-Werte von dem pH-Sensor (2), die aufgezeichneten Temperaturen von dem Temperatursensor (3) und die aufgezeichnete akkumulierte Masse, $S_{n,acc}$, von fester Flugasche, die zu der wässrigen Mineralsäurelösung gegeben wird, zu empfangen, und welche:
eine Computer-Hardware mit Computer-Software umfasst, die bei Ausführung den aufgezeichneten pH von dem pH-Sensor (2), die Temperatur von dem TemperaturSensor (3) und die aufgezeichnete akkumulierte Masse, $S_{n,acc}$, von fester Flugasche, die zugegeben wird, verwendet, um die Gesamtmenge an fester Flugasche, die zu der wässrigen Mineralsäurelösung nach dem Verfahren nach einem der Ansprüche 1-10 zuzugeben ist, zu bestimmen, und welche die Zuführung von fester Flugasche (4) zu der wässrigen Mineralsäurelösung (5) entsprechend reguliert.

15. Auflösungsreaktor nach Anspruch 14, der ferner einen Impeller (7) umfasst, der sich in der wässrigen Mineralsäurelösung befindet.

16. Anlage zum Extrahieren von Metallen aus Flugasche, umfassend einen Auflösungsreaktor nach Anspruch 14 oder 15, ferner umfassend:

einen ersten Separator (8), der angepasst ist, um die im Auflösungsreaktor (1) gebildete Suspension (9) in eine feste Fraktion (10) ungelöster Flugasche und eine erste flüssige Fraktion (11), die gelöste Flugasche enthält, zu trennen,
einen Präzipitationsreaktor (12), der angepasst ist, um die erste flüssige Fraktion (11) aufzunehmen,
eine Zuführung für eine Base (13), die angepasst ist, Base zu der ersten flüssigen Fraktion (11), die in dem Präzipitationsreaktor (12) enthalten ist, zu geben,
einen zweiten Separator (14), der angepasst ist, um die flüssige Fraktion, die präzipitierte Metallhydroxide (15) enthält, aufzunehmen und sie in eine feste Fraktion (16) präzipitierter Metallhydroxide und eine zweite flüssige Fraktion (17) zu trennen.

**17.** Anlage nach Anspruch 16, ferner umfassend:

eine Zuführung für magnetische Partikel (19), die ein oder mehrere Metallion-absorbierende(s) Adsorbens/Adsorbentien an ihrer Oberfläche haben,
einen Mischtank (18), der angepasst ist, um die zweite flüssige Fraktion (17) und magnetische Partikel aus einer Zuführung für magnetische Partikel (19) aufzunehmen und die Flüssigkeit und die Partikel zu mischen,
einen magnetischen Separator (22), der angepasst ist, um das Gemisch (21) der zweiten flüssigen Fraktion und magnetischer Partikel aufzunehmen und das Gemisch (21) in eine feste Fraktion (25) magnetischer Partikel und eine dritte flüssige Fraktion (24) zu trennen, und gegebenenfalls
einen Schnellrührer (20), der sich im Mischtank befindet.

**18.** Anlage nach Anspruch 16 oder 17, wobei die magnetischen Partikel:

eine mittlere Partikelgröße, $d_{50}$, im Bereich von 10 nm bis 10 µm, vorzugsweise von 50 nm bis 5 µm und am Bevorzugtesten von 100 nm bis 1 µm haben und
wobei die mittlere Partikelgröße, $d_{50}$, den medianen Durchmesser der Partikelgrößenverteilung, bestimmt gemäß Standards ASTM E2651-13 oder ISO 13317-1-2001, bezeichnet, und wobei die magnetischen Partikel entweder ferromagnetisch, ferrimagnetisch, superparamagnetisch oder Kombinationen dieser Eigenschaften sind.

## Revendications

**1.** Procédé pour former une suspension de cendres volantes partiellement dissoutes dans une solution d'acide minéral aqueuse, lequel procédé comprend les étapes de traitement suivantes :

1) fournir une masse, L, d'une solution aqueuse d'acide minéral à un réacteur de dissolution puis mesurer et enregistrer la température initiale, To, et le pH initial, pHo, de la solution aqueuse d'acide minéral,
2) établir n = 1, où n est un entier, et choisir un pH cible, $pH_{targ}$, devant être atteint dans la suspension,
3) pour n ≤ N, où N est un entier de 3 ou plus, exécuter les étapes i), ii) et iii) dans l'ordre successif :

i) ajouter et mélanger une quantité $S_n$ de cendres volantes solides dans la solution aqueuse d'acide minéral,
ii) lorsque la quantité $S_n$ est dissoute, mesurer et enregistrer la température et le pH de la solution aqueuse d'acide minéral à cette énième étape en tant que $T_n$ et $pH_n$, respectivement, et déterminer et enregistrer une quantité accumulée de cendres volantes, $S_{n,acc}$, qui est ajoutée à la solution d'acide minéral aqueuse à cette énième étape, et
iii) établir n = n + 1 et passer à l'étape i),

4) appliquer les températures enregistrées To à $T_n$ et les valeurs de pH enregistrées $pH_0$ à $pH_{n,}$, et les quantités enregistrées de cendres volantes ajoutées, $S_{n,acc}$, et les équations :

$$\Gamma_n^2 = \beta_1 - \beta_2 \Delta T_n \quad \text{et} \quad \Delta T_n = \gamma_1 \left(\frac{S_{n,acc}}{L}\right) - \gamma_2 \left(\frac{S_{n,acc}}{L}\right)^2,$$

où $\Gamma_n = 10^{-pH_n}$, $\Delta T_n = T_n - T_0$, et $\beta_1$, $\beta_2$, $\gamma_1$ et $\gamma_2$ sont des paramètres, pour déterminer les paramètres $\beta_1$, $\beta_2$, $\gamma_1$ et $\gamma_2$ par analyse de régression,
5) déterminer une quantité totale, $S_{tot}$, de cendres volantes solides devant être ajoutée à la solution d'acide minéral aqueuse à partir de la relation :

$$S_{tot} = \frac{L}{2\gamma_2}\left[\gamma_1 + \sqrt{\gamma_1^2 + 4\gamma_2\left(\frac{\beta_1 - (10^{-pH_{targ}})^2}{\beta_2}\right)}\right],$$

et

6) si $S_{n,acc} < S_{tot}$, exécuter les étapes j) et jjj) :

j) ajouter et mélanger une quantité $S_n$ dans la solution aqueuse d'acide minéral,
jjj) si $S_{n,acc} < S_{tot}$, établir n = n + 1 et passer à l'étape j),
ou bien :
jjjj) arrêter l'alimentation et le mélange de cendres volantes solides dans la solution aqueuse d'acide minéral.

**2.** Procédé selon la revendication 1, dans lequel l'étape 6) comprend en outre l'étape jj) devant être exécutée après l'étape j) et avant l'étape jjj) :
jj) lorsque la quantité ajoutée $S_n$ est dissoute, mesurer et enregistrer la température et le pH de la solution aqueuse d'acide minéral à cette énième étape en tant que $T_n$ et $pH_n$, respectivement, et déterminer et enregistrer une quantité accumulée de cendres volantes, $S_{n,acc}$, qui est ajoutée au minéral aqueux à cette énième étape, puis répéter les étapes 4) et 5) pour fournir une détermination affinée de $S_{tot}$.

**3.** Procédé selon la revendication 1 ou 2, qui comprend en outre l'agitation de la solution aqueuse d'acide minéral pendant la formation de la suspension de cendres volantes partiellement dissoutes en utilisant un agitateur ou par agitation gazeuse.

**4.** Procédé selon l'une quelconque des revendications précédentes, dans lequel la quantité $S_n$ est déterminée par la relation :

$$S_n = \frac{S_{est}}{k}$$

où $S_{est}$ est une estimation de la quantité totale de cendres volantes devant être ajoutée, et k est un entier choisi pour être de (et incluant) 5 à (et incluant) 100, de préférence de 7 à 75, de préférence encore de 10 à 50 et de toute préférence de 20 à 30.

**5.** Procédé selon la revendication 4, dans lequel lorsque n $\geq$ [0,75k], la quantité $S_n$ est déterminée par la relation :

$$S_n = \frac{S_{est}}{ak}$$

dans laquelle a est un entier choisi pour être tout entier de 2 à 10, de préférence de 3 à 10 et de préférence encore de 5 à 10.

**6.** Procédé selon l'une quelconque des revendications précédentes, dans lequel l'estimation de la quantité totale devant être ajoutée, $S_{est}$, est déterminée en appliquant l'équilibre d'acide :

$$S_{est} = \frac{L}{C_B}[C_0 - 10^{-pH_{targ}}],$$

où $C_B$ est la concentration de base soluble dans les cendres volantes solides.

**7.** Procédé selon les revendications 4 à 6, dans lequel N est choisi pour être un entier qui est égal à k/2.

**8.** Procédé selon l'une quelconque des revendications 1 à 6, dans lequel le nombre N est tout entier de (et incluant) 3 à (et incluant) 10, de préférence de 4 à 8, de préférence encore de 5 à 7.

**9.** Procédé selon l'une quelconque des revendications précédentes, dans lequel la solution aqueuse d'acide minéral est de l'acide chlorhydrique ou de l'acide nitrique, ou un mélange de ceux-ci, ayant un pH initial $\leq$ 2, de préférence $\leq$ 1,5, de toute préférence $\leq$ 1,0.

**10.** Procédé selon l'une quelconque des revendications précédentes, dans lequel un ou plusieurs des agents oxydants sont ajoutés à la solution aqueuse d'acide minéral, de préférence $O_3$ et/ou $H_2O_2$, l'addition d'un ou plusieurs agents oxydants est de préférence faite dans l'étape 1).

11. Procédé d'extraction d'un ou plusieurs métaux à partir de cendres volantes solides, lequel procédé comprend :

la sélection d'un pH cible, $pH_{targ}$, fournissant un taux de dissolution optimisé des sels dans les cendres volantes contenant le ou les métaux devant être extraits et la formation d'une suspension selon l'une quelconque des revendications 1 à 10,
le passage de la suspension formée dans un séparateur séparant la suspension en une fraction solide de cendres volantes non dissoutes et une première fraction liquide contenant les cendres volantes dissoutes,
l'élimination de la fraction solide de cendres volantes non dissoutes,
l'addition d'une base à la première fraction liquide pour augmenter le pH à un niveau où un ou plusieurs métaux dissous dans la première fraction liquide précipitent sous la forme d'hydroxydes métalliques,
le passage de la première fraction liquide avec les hydroxydes métalliques précipités dans un séparateur séparant la première fraction liquide avec les hydroxydes métalliques précipités en une fraction solide d'hydroxydes métalliques précipités et une deuxième fraction liquide, et
la collecte et facultativement le passage de la fraction solide d'hydroxydes métalliques précipités à un traitement supplémentaire.

12. Procédé selon la revendication 11, dans lequel la base est choisie parmi l'un de : NaOH, KOH, $Ca(OH)_2$, CaO ou $Mg(OH)_2$, ou un mélange de deux ou plus de ceux-ci.

13. Procédé selon la revendication 11 ou 12, qui comprend en outre :

le mélange de la deuxième fraction liquide avec des particules magnétiques solides ayant un ou plusieurs adsorbants sur leur surface qui adsorbent sélectivement les ions métalliques devant être extraits,
la fourniture du mélange de particules magnétiques et du deuxième résidu liquide à un séparateur magnétique séparant le mélange en une fraction de particules magnétiques et une troisième fraction liquide,
la désorption des ions métalliques adsorbés à partir des adsorbants sur les particules magnétiques et la collecte des ions métalliques désorbés en tant que fraction de produit,
l'élimination de la troisième fraction liquide, et facultativement la régénération du ou des adsorbants sur les particules magnétiques désorbées.

14. Réacteur de dissolution pour former une suspension de cendres volantes partiellement dissoutes dans une solution aqueuse d'acide minéral, comprenant :

un espace de réacteur (1) adapté pour recevoir et contenir une masse, L, de la solution aqueuse d'acide minéral à une concentration initiale, $C_0$, et un $pH_0$ initial,
un capteur de pH (2) adapté pour mesurer et enregistrer le pH dans la solution aqueuse d'acide minéral,
un capteur de température (3) adapté pour mesurer et enregistrer la température de la solution aqueuse d'acide minéral,
une alimentation en cendres volantes solides (4) adaptée pour alimenter des quantités subséquentes, $S_n$, de cendres volantes solides dans la solution aqueuse d'acide minéral dans l'espace de réacteur (1) et pour enregistrer la masse accumulée, $S_{n,acc}$, de cendres volantes solides qui est ajoutée,
une alimentation en solution aqueuse d'acide minéral (5) adaptée pour alimenter la quantité L de solution aqueuse d'acide minéral à l'espace de réacteur (1), et
un dispositif de contrôle (6), qui est :
adapté pour recevoir les valeurs de pH enregistrées par le capteur de pH (2), les températures enregistrées par le capteur de température (3) et la masse accumulée enregistrée, $S_{n,acc}$, de cendres volantes solides qui est ajoutée à la solution aqueuse d'acide minéral, et qui :
comprend un matériel informatique avec un logiciel informatique contenant des instructions qui, lorsqu'elles sont exécutées, utilisent le pH enregistré par le capteur de pH (2), les températures du capteur de température (3) et la masse accumulée enregistrée, $S_{n,acc}$, de cendres volantes solides qui est ajoutée pour déterminer la quantité totale de cendres volantes solides devant être ajoutée à la solution aqueuse d'acide minéral selon le procédé selon l'une quelconque des revendications 1 à 10, et qui régule l'alimentation en cendres volantes solides (4) à la solution aqueuse d'acide minéral (5) en conséquence.

15. Réacteur de dissolution selon la revendication 14, comprenant en outre un agitateur (7) se trouvant dans la solution aqueuse d'acide minéral.

16. Installation pour extraire des métaux à partir de cendres volantes, comprenant un réacteur de dissolution selon la revendication 14 ou 15, comprenant en outre :

un premier séparateur (8) adapté pour séparer la suspension (9) formée dans le réacteur de dissolution (1) en une fraction solide (10) de cendres volantes non dissoutes et une première fraction liquide (11) contenant des cendres volantes dissoutes,
un réacteur de précipitation (12) adapté pour recevoir la première fraction liquide (11),
une alimentation en une base (13) adaptée pour ajouter une base à la première fraction liquide (11) contenue dans le réacteur de précipitation (12),
un second séparateur (14) adapté pour recevoir la fraction liquide contenant des hydroxydes métalliques précipités (15) et pour la séparer en une fraction solide (16) d'hydroxydes métalliques précipités et une deuxième fraction liquide (17).

17. Installation selon la revendication 16, comprenant en outre :

une alimentation en particules magnétiques (19) ayant un ou plusieurs adsorbants adsorbant des ions métalliques sur leur surface,
un réservoir de mélange (18) adapté pour recevoir la deuxième fraction fluide (17) et les particules magnétiques depuis l'alimentation en particules magnétiques (19) et pour mélanger le liquide et les particules,
un séparateur magnétique (22) adapté pour recevoir le mélange (21) de la deuxième fraction liquide et des particules magnétiques, et pour séparer le mélange (21) en une fraction solide (25) de particules magnétiques et une troisième fraction liquide (24), et facultativement,
un agitateur (20) se trouvant dans le réservoir de mélange (18).

18. Installation selon la revendication 16 ou 17, dans laquelle les particules magnétiques ont une taille moyenne de particule, dso, dans la gamme de 10 nm à 10 $\mu$m, de préférence de 50 nm à 5 $\mu$m, et de toute préférence de 100 nm à 1 $\mu$m, et dans laquelle la taille moyenne de particule, dso, signifie le diamètre médian de la distribution de taille de particule, déterminée d'après les normes ASTM E2651-13 ou ISO-13317-1-2001, et dans laquelle les particules magnétiques sont soit ferromagnétiques, ferrimagnétiques, superparamagnétiques soit des combinaisons de ces propriétés.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5512257 A
- US 4617180 A
- JP 2001113242 A
- JP 2003181413 A
- JP 2005272955 A
- JP 2007186761 A
- WO 2005040437 A1

### Non-patent literature cited in the description

- **WANG J ; JIANG JG ; SUI JC ; YANG SJ ; ZHANG Y.** Fundamental properties of fly ash from municipal solid waste incineration. *Huan Jing Ke Xue,* November 2006, vol. 27 (11), 2283-7
- **ONCEL MS ; MUHCU A ; DEMIRBAS E ; KOBYA M.** A comparative study of chemical precipitation and electrocoagulation for treatment of coal acid drainage wastewater. *J.Env.Chem.Eng.,* 2013, (1), 989-995